# EUROPEAN PATENT SPECIFICATION

(11) **EP 4 573 319 B1**
(45) Date of publication and mention of the grant of the patent: **21.10.2026**
(21) Application number: 23757722.6
(22) Date of filing: 15.08.2023
(51) Int. Cl.: F23D 14/22, F23D 14/32

(54) **A GAS HEATER ASSEMBLY FOR A GAS HEATING PROCESS AND A SYSTEM FOR A GAS HEATING PROCESS**
GASHEIZANORDNUNG FÜR EIN GASHEIZVERFAHREN UND SYSTEM FÜR EIN GASHEIZVERFAHREN
ENSEMBLE RÉCHAUFFEUR DE GAZ POUR UN PROCESSUS DE CHAUFFAGE DE GAZ ET SYSTÈME POUR UN PROCESSUS DE CHAUFFAGE DE GAZ

(30) Priority: 16.08.2022 SE 2250969
(43) Date of publication of application: 25.06.2025
(73) Proprietor: LUOSSAVAARA KIIRUNAVAARA AB, 971 28 Luleå (SE)
(72) Inventor: LAKDAWALA, Shabbir Taherbhai, 974 44 Luleå (SE); FREDRIKSSON, Christian, 976 31 Luleå (SE); EKLUND, Nicklas, 942 34 Älvsbyn (SE)
(74) Representative: Zacco Sweden AB
(86) International application number: PCT/SE2023/050825
(87) International publication number: WO 2024/039276

(56) References cited:
- EP-B1- 1 017 619
- US-A- 5 725 366

## Description

### Technical field

The present invention relates to a gas heater assembly for a gas heating process and a system for a gas heating process. More specifically, the invention relates to a gas heater assembly for a gas heating process and a system for a gas heating process as defined in the introductory parts of the independent claims.

### Background art

A majority of commercial global direct reduction technologies in the iron industry use natural gas to generate synthesis gas for reduction, via a stoichiometric reformer, a steam reformer or a zero reformer via a combination of a partial combustion system and in-situ reforming. These technologies may use direct reduced grade iron ore pellets or alternative pellets as feed to produce one of these products that may be cold direct reduced iron, hot direct reduced iron or hot briquetted iron.

The reduction gas used in a reduction process may be heated to a temperature of about 920-950 degrees Celsius, either in reformers or external gas/fuel fired heaters. This may be followed by an oxygen injection or partial combustion system to boost temperature to a level of 980-1100 degrees Celsius at a point of injection of the reduction reactor.

The thermal efficiency of external fuel-fired combustion heater may nominally be in the range of 70-85%, and depends on various design, operation, reliability, and environment conditions to maintain efficiency in design/optimum level. In addition to the thermal combustion aspect, additional power is used to support a flue gas draft fan, combustion air blowers, heating coils, a heat recovery system, a fire box, which is needed for efficient functioning of the complete system.

There are numerous of known applications that use oxygen-fuel burner systems. In the direct reduction process area of major commercial global direct reduction technologies, it is nominally termed as oxygen injection system or partial combustion system. In the steel melting electric arc furnaces, oxygen injection systems are used to boost thermal energy for melting via oxygen injection along with coke, natural gas and even hydrogen. These applications only partially fulfill or augment the thermal need of the system.

The current design of conventional gas fired heaters use air fuel combustion to heat the reduction gas. Current conventional design use external fuel fired burners as a heat source. The radiation heat from burners is used to heat the heater coils/tubes in a fire box, called the radiant section. The process or reduction gas passes through/within the heater coils and is heated by conduction of heat through tube walls.

The document EP 1017619 B1 discloses a burner for combustion of gases, comprising an elongated burner tube.

The document US 5725366 A discloses an oxy-fuel combustion system comprising a burner that includes a precombustion chamber in which a portion of the fuel is burned to generate precombustion products used for preheating the remaining fuel. The system utilizes staged oxidant injection via oxidant inlets arranged around the fuel flow to promote controlled mixing, thereby creating fuel-rich zones within the flame. This configuration enhances soot formation and flame luminosity while reducing NOx emissions. The burner design is therefore primarily configured to control flame characteristics and emissions within the combustion zone.

### Summary

The known heater systems comprises a number of components, such as a fire box, a heat recovery section, burners, fuel supply, combustion air blowers, induced draught fans and heater coils. The efficiency of these known heater systems may typically be between 70-85%. The design of the known burners is often tailored in order to ensure that flue gas emissions of NOx and SOx meet effluent requirements. Known heat recovery systems are also need to be designed appropriately to ensure that the exit flue gas temperature is low but not below dew point. The choice of internal thermal insulation lining influences the heat loss from the surface of the known heater box. A large surface area of the complete heater assembly results in a large heat loss.

Therefore, there is a critical thermal efficiency limit beyond which the system may not be improved by virtue of design with respect to cost, which results in limitation. There is thus a need for an improved heater system.

It is an object of the present invention to mitigate, alleviate or eliminate one or more of the above-identified deficiencies and disadvantages in the prior art and solve at least the above mentioned problem.

Accordingly, it is an object of the invention to provide a gas heater assembly with increased thermal efficiency.

It is further an object of this invention to provide a gas heater assembly, which creates a low environment impact.

It is further an object of this invention to provide a reliable gas heater assembly with low maintenance needs.

These objectives are achieved by a gas heater assembly and a system for a gas heating process according to the appended claims.

According to a first aspect of the invention there is provided a gas heater assembly for a gas heating process, the assembly being defined in claim 1.

The present invention achieves the highest thermal/combustion efficiency, which proposes a process gas inline internal combustion burner. In such gas heater assembly the process gas is internally heated without using the conventional fired heater set up. Depending on the injecting fuel and an oxidizing gas, the residual products of the combustion creates a low environment impact. The gas heater assembly provides an inline burner, wherein the gas will be heated via direct contact with the generated burning flame. Thus, in such gas heater assembly, an increased thermal efficiency is achieved and a low environment impact is created. Further, the present gas heater assembly is reliable with low maintenance needs. A reduced number of components of the gas heater assembly also results in low maintenance needs. The burner body comprises a front end and a rear end. The front end of the burner body is configured to split, diverge and guide the gas to be heated into the first annular channel. The rear end of the burner body comprises a flame opening for the burning flame, which is configured to heat the gas which passing the first annular channel. The burner housing comprising a first open end and a second open end. The gas in the space between the outside of the burner body and the inside of the housing wall of the burner housing may have a reduced temperature. Thus, burner housing, comprising a housing wall, which is configured to encircle the burner body and to create a first annular channel for the gas to be heated in a space between the outside of the burner body and the inside of the housing wall of the burner housing.

According to a second aspect of the invention there is provided a system for a gas heating process, the system comprising: a furnace configured for receiving heated gases; an inlet opening of the furnace, configured for supplying the heated gases to the furnace; an outlet channel connected to the furnace, configured for remove the gases as spent gases or utilized gases from the furnace and for supply the gases to the inlet opening of the furnace via a recirculation circuit, wherein the system comprises: a gas heater assembly according to the first aspect.

In this system, which comprises the above-mentioned gas heater assembly, a complete fulfillment of thermal requirement of the process is provided and improved thermal energy of the system is achieved. Further, due to the low environment impact created by the gas heater assembly and the low maintenance needs the gas heater assembly, also the system provides a low environment impact and low maintenance needs. Effects and features of the second aspect are to a large extent analogous to those described above in connection with the first aspect.

Additional objectives, advantages and novel features of the invention will be apparent to one skilled in the art from the following details, and through exercising the invention. While the invention is described below, it should be apparent that the invention is not limited to the specifically described details. One skilled in the art, having access to the teachings herein, will recognize additional applications, modifications and incorporations in other areas, which are within the scope of the invention.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 schematically illustrates in a front view, a gas heater assembly according to an example,
Figure 2 schematically illustrates the gas heater assembly in a section view along line A-A in Figure 1, and
Figure 3 schematically illustrates a system for a gas heating process according to an example.

### Detailed description

The present invention will now be described with reference to the accompanying drawings. The disclosure may, however, be embodied in other forms and should not be construed as limited to the herein described disclosure. The described disclosure is provided to fully convey the scope of the disclosure to the skilled person.

According to a first aspect of the invention there is provided a gas heater assembly for a gas heating process, the assembly comprising: a burner body comprising a burner chamber for burning an injecting fuel and an oxidizing gas, which burner chamber is arranged in a cavity of the burning body; a first conveying pipe for supplying the injecting fuel to the burner chamber; a second conveying pipe for supplying the oxidizing gas to the burner chamber; a burner housing, comprising a housing wall, which is configured to encircle the burner body and to create a first annular channel for a gas in a space between the outside of the burner body and the inside of the housing wall of the burner housing, wherein the first annular channel for the gas comprises a first diverging section in which the gas to be heated is guided into a second converging section, in which the velocity of the gas to be heated increases, and wherein the second converging section discharges in a third high velocity section, in which the burning flame increases the temperature and the velocity of the gas to be heated; at least one burner body support, which is configured to support and center the burner body in the burner housing, wherein the burner body comprises a flame opening for a burning flame, which is configured to heat the gas which passing the first annular channel, and wherein the burner body comprises a dome shaped nose cone arranged in the first diverging section, which dome shaped nose cone is configured to split, diverge and guide the gas to be heated into the second converging section.

The gas heater assembly may increase the temperature of a gas. The gas heater assembly may have an elongated extension. The gas heater assembly may guide the gas along the elongated extension of the assembly. The gas heating process may be a process to heat gas for reducing grade Iron ore pellets or alternative pellets. The gas may be heated to a level of 980-1100 degrees Celsius. The heat in the gas heater assembly is generated by the burner body. The burner body may be surrounded by the gas to be heated. The burner body may have a shape that allows the gas to be heated to flow by and pass the burner body with as low resistance as possible. The gas in the space between the outside of the burner body and the inside of the housing wall of the burner housing may have a reduced temperature. Thus, burner housing, comprising a housing wall, which is configured to encircle the burner body and to create the first annular channel for the gas to be heated in a space between the outside of the burner body and the inside of the housing wall of the burner housing. The burner body may have a shape that controls the direction of the gas flow. The burner body may have a shape that controls the flow rate of the gas flow. The burner body may have a shape that controls the flow pressure of the gas flow. The burner body may comprise a front end and a rear end. The burner body is provided with a cavity. The cavity may be configured as an open space, which at least partly is surrounded by walls of the burner body. In the burner chamber injecting fuel is ignited and burns for generating the heat. The burner chamber may be a combustion chamber. The burner chamber is made of a material, which withstands high temperatures. The cavity of the burner body may be the burner chamber. The burner chamber may be a separate unit arranged in the cavity. The injecting fuel may be a gaseous fuel. The injecting fuel may be injected into the burner chamber through a nozzle. The nozzle configured to inject the injecting fuel may be arranged directly in the burner chamber. The oxidizing gas may be injected in to the burner chamber. The oxidizing gas is configured to burn together with the injecting fuel. The oxidizing gas may be injected into the burner chamber through a nozzle. The nozzle configured to inject the oxidizing gas may be arranged directly in the burner chamber. The first conveying pipe is configured to supply the injecting fuel in to the burner chamber. The first conveying pipe may be connected to the nozzle, which is configured to inject the injecting fuel in to the burner chamber. The injecting fuel may be supplied through the first conveying pipe by pressure from a pressure vessel or by a pump. The second conveying pipe is configured to supply the oxidizing gas in to the burner chamber. The second conveying pipe may be connected to the nozzle, which is configured to inject the oxidizing gas in to the burner chamber. The injecting fuel may be supplied through the second conveying pipe by pressure from a pressure vessel or by a pump. The injecting fuel and the oxidizing gas may be mixed together before they ignite and burn in the burning chamber. The burner housing may be configured as a cylinder, which encircles the burner body. The housing wall of the burner housing may have a circular configuration in a section view in a plane having a center line as the normal to the plane. The housing wall may have a wall thickness, which varies along the length of the burner housing. The burner housing may be open in both ends of the housing wall. A space is created between the outside of the burner body and the inside of the housing wall of the burner housing. This space is the first annular channel. The first annular channel has an extension from one first end of the burner body to a second end of the burner body. The first annual channel may have a funnel shape. The inner dimeter of the housing wall and the outer diameter of the burner body decides the width of the first annual channel. The gas is configured to flow in the first annual channel. The burner body may be immersed in the gas. The gas may be a process gas for heating material in the iron industry, such as iron ore pellets. The burner housing may comprise a first open end and a second open end. Thus, the burner housing may be open in both ends of the housing wall. There may be at least one burner body support, which fixates the position of the burner body in relation to the burner housing. There may be a number of burner body supports, which are spread at an even distance from each other. The burner body support may centre the burner body in relation to the burner housing, so that the width of the first annular channel may be uniform. The front end of the burner body is configured to split, diverge and guide the gas to be heated into the first annular channel. The flame opening may be arranged in the rear end of burner body. The flame opening may have a circular configuration. The burning injection fuel and oxidizing gas generates a positive pressure in the burner chamber. Due to the positive pressure in the burning chamber, the burning injection fuel and oxidizing gas will exit the burning chamber as a burning flame through the flame opening. The gas flowing in the first annular channel will pass the burning flame. When passing the burning flame, the gas is heated by the burning flame.

In the first diverging section the gas is evenly distributed in the first annular channel and around the burner body. The gas has a reduced temperature in relation to the temperature of the gas when the gas is passing the burning flame and has been heated by the burning flame. In the first diverging section, the diameter of the burner body may increase downstream of the first diverging section. In the first diverging section, the diameter of the inside of the housing wall of the burner housing may be constant or may increase or decrease slightly. In the second converging section the flow velocity of the gas to be heated increases due to the shape of the second annular channel. In the third high velocity section of the first annular channel, the gas will pass the burning flame. At this stage the temperature and the velocity of the gas increases due to the flame velocity. Thus, the first annular channel comprises the first diverging section, the second converging section and the third high velocity section.

The dome shaped nose cone is arranged in the first diverging section. The front end of the burner body may comprise the dome shaped nose cone. The diameter of the burner body may increase downstream of the first diverging section due to the dome shaped nose cone. In the first diverging section, the diameter of the inside of the housing wall of the burner housing may be constant or may or may increase or decrease slightly. The dome shaped nose cone may evenly distribute the gas in the first annular channel and around the burner body.

A front end of the burner body may comprise the dome shaped nose cone. The dome shaped nose cone may be arranged in the front end of the burner body. The dome shaped nose cone arranged in the front end of the burner body splits, diverges and guides the gas to be heated into the second converging section. The burner body arranged in the second converging section may have a conical frustum shape, which converges in the direction towards the flame opening of the burner body. The conical frustum shape of burner body creates a funnel shape of the second converging section of the first annular channel. The conical frustum shape of the burner body reduces the diameter of the burner body in the direction downstream of the second converging section of the first annular channel, and thus also in the direction towards the flame opening of the burner body. The funnel shaped part of the first annular channel in the second converging section may be achieved by reducing the inner diameter of the inside of the housing wall of the burner housing. Due to the reduced area of the first annular channel downstream of the second converging section, the flow velocity of the gas to be heated is increased.

The velocity of the gas to be heated, which is increased in the third high velocity section may be configured to create a vacuum in the first diverging section. Due to the increased velocity of the gas, heated in the third high velocity section, a gas flow is created through the first annular channel. The created gas flow facilitates the delivery of heated gas from the gas heater assembly. The vacuum may be a negative draught. Thus, the velocity of the gas to be heated, which is increased in the third high velocity section may be configured to create a vacuum or a negative draught in the first diverging section. The velocity of the gas to be heated, which is increased in the third high velocity section may be configured to create a negative draught in the first diverging section. The velocity of the gas to be heated, which is increased in the third high velocity section may be configured to create gas flow through the first annular channel.

The first conveying pipe for supplying the injecting fuel to the burner chamber may be configured for supplying hydrogen as injecting fuel, and the second conveying pipe for supplying the oxidizing gas to the burner chamber is configured to inject oxygen or air as an oxidizing gas to burn together with the hydrogen. The assembly seeks the most efficient energy application method to power process needs and aim at creating lowest environment impact. Using hydrogen as injecting fuel to the burner chamber fulfills these need and aim. The assembly effectively prevents ambient air to take part in the burning of the hydrogen and the oxidizing gas, which may reduce the formation of NOx. Injecting air, or a mixture of oxygen and air, as an oxidizing gas to burn together with the hydrogen may create a reduced formation of NOx, which may have reduced impact on the environment. The gas with a reduced temperature, which is guided in the first annular channel, may be isolated and free from the ambient air and will thus reduce the formation of NOx when heated by the burning flame. Hydrogen from a makeup fuel source may be supplied as a first makeup gas to the gas with a reduced temperature, which is guided in the first annular channel. The volume of ambient air as oxidizing gas is considerably lower than the volume of oxidizing gas supplied to the burning chamber, which therefore may create a reduced formation of NOx. The final product from the assembly may be a mixture of flue gas mainly H₂O and hot process gas, heated to a required temperature.

The at least one burner body support may be configured to housing and guide the first and second conveying pipes into the burner chamber of the burner body. The at least one burner body support fixates the position of the burner body in relation to the burner housing. The first and second conveying pipes may be arranged in the same support. However, there may be a number of burner body supports. One burner body support may house the first conveying pipe and another burner body support may house the second conveying pipe. The at least one burner body support may have an aerodynamic shape in order to prevent the support from disturbing the gas flow in the first annular channel. The first and second conveying pipes may thus extend through the housing wall of the burner housing, through the at least one burner body support, through the wall of the burner body and finally into the burner channel or to a nozzle in the burner chamber.

The burner body may have a circular cross section. The burner housing is configured to encircle the burner body. The circular cross section of the burner body together with the burner housing, which encircles the burner body may evenly distribute the gas flow in the first annular channel. An evenly distributed gas flow may increase the efficiency of the gas heater assembly.

The first annular channel for the gas to be heated and the circular burner body may have a common center line. Arranging the first annular channel and the circular burner body so their respective center lines coincides may result in that the gas flow is evenly distributed in the first annular channel.

The burner body comprises a central burner element arranged in the cavity, and which central burner element comprises the burner chamber, and wherein an outer wall of the burner body is configured to encircle the central burner element and to create a second annular channel between the outside of the central burner element and the inside of the outer wall of the burner body. The cavity of the burner body is configured to receive the burner chamber. Fixating means may be arranged to fixate the burner chamber in the cavity of the burner body. This complex conical frustum arrangement of the central burner element has a smaller radius section in direction of the gas flow. Thus, this arrangement may comprise an annular construction of axially aligned multiple cone inserts. The injected fuel and the oxidizing gas are ignited in the central burner element, and the combustion gases exit central burner element and the flame opening of the burner opening. The second annular channel may shield the burner body from flame radiation heat in order to maintain an acceptably consistent burner body temperature.

A third conveying pipe may be arranged for supplying a second makeup gas to the second annular channel, which second makeup gas is configured to flow out through the flame opening of the burner body. The second makeup gas is configured to flow in the second annular channel. The second makeup gas flow can be regulated based on the temperature of the gas to be heated in the first annular channel in order to control the flame temperature. The convergence of the burner body creates a high velocity zone downstream of the burner body, where the flame and the second makeup gas mix may reach a homogenous gas temperature as a result. The second makeup gas may be a hydrogen gas. The second makeup gas may envelop or blanket the burning flame with fresh makeup gas to control the flame temperature. The second makeup gas may maintain an acceptably consistent burner body temperature and shield burner body from flame radiation heat.

The burner body comprises at least one intermediate burner element, which is arranged in the second annular channel. Such an arrangement may comprise an annular construction of axially aligned multiple cone inserts. The injected fuel and the oxidizing gas are ignited in the central burner element, and the combustion gases exit central burner element and the flame opening of the burner opening. Further annular channels may be created by further intermediate burner element. Conveying pipes may be arranged and connected to the further created annular channels. The conveying pipes may be configured to supply further makeup gases, which are configured to flow out through the flame opening of the burner body. At least one intermediate burner element may shield the burner body from flame radiation heat in order to maintain an acceptably consistent burner body temperature.

According to a second aspect there is provided a system for a gas heating process, the system comprising: a furnace configured for receiving heated gases; an inlet opening of the furnace, configured for supplying the heated gases to the furnace; an outlet channel connected to the furnace, configured for remove the gases as spent gases or utilized gases from the furnace and for supply the gases to the inlet opening of the furnace via a recirculation circuit, wherein the system comprises: a gas heater assembly according to the first aspect.

The gas heating process may be a process to heat gas for reducing grade Iron ore pellets or alternative pellets. The gas may be heated to a level of 980-1100 degrees Celsius. The heat is generated by the gas heater assembly. The furnace may be configured to accommodate the grade Iron ore pellets or alternative pellets. The furnace may be a vertical reduction furnace wherein the pellets are reduced into metallic iron, such as sponge iron or direct reduced iron (DRI). The heated gases are supplied by the gas heater assembly to the furnace through the inlet opening of the furnace. The gas heater assembly may be connected directly to the inlet opening of the furnace or via an inlet pipe. The furnace comprises an outlet opening to which an outlet channel is connected. The heated gases supplied through the inlet opening of the furnace are removed from the furnace through the outlet channel as spent gases or utilized gases. The outlet channel and the inlet channel are connected to each other via a recirculation circuit. The gas heater assembly are connected to the recirculation circuit between the outlet opening and the inlet opening of the furnace for supplying the gases to the inlet opening of the furnace.

A process gas recirculation compressor may be connected to the recirculation circuit and upstream of the gas heater assembly. The recirculation compressor is configured to create mass flow of the gases in the recirculation circuit from the outlet opening to the inlet opening of the furnace. The recirculation compressor power may be reduced due to the mass flow of the gases created by the gas heater assembly.

An injecting fuel source may be connected to the gas heater assembly. The injecting fuel source may comprise hydrogen as injecting fuel. The injecting fuel may be pressurized in the injecting fuel source and be supplied by pressure to the gas heater assembly. The injecting fuel source may be a pressure vessel. The injecting fuel source may be connected to the first conveying pipe for supplying the injecting fuel to the burner chamber of the gas heater assembly.

An oxidizing gas source may be connected to the gas heater assembly. The oxidizing gas source may comprise oxygen or air. The oxidizing gas may be pressurized in the oxidizing gas source and be supplied by pressure to the gas heater assembly. The oxidizing gas source may be a pressure vessel. The oxidizing gas source may be connected to the second conveying pipe for supplying the oxidizing gas to the burner chamber of the gas heater assembly.

Hydrogen from a makeup fuel source may be supplied as a second makeup gas to the gas heater assembly and/or as a first makeup gas to the recirculation circuit. Hydrogen from a makeup fuel source may be supplied as a first makeup gas to the recirculation circuit upstream of the gas heater assembly. The gas with a reduced temperature, which is guided in the first annular channel of the gas heater assembly may thus be mixed with the hydrogen from the makeup fuel source. Adding hydrogen as a makeup gas may reduce the formation of NOx in the gas heating process.

The furnace may be a direct reduction reactor for reduction of iron ore into iron. In the direct reduction reactor, iron ore oxide pellets are heated in a shaft furnace at a high temperature in the presence of a reducing gas whereby the pellets are reduced into metallic iron also called sponge iron or direct reduced iron (DRI).

### Example embodiments

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

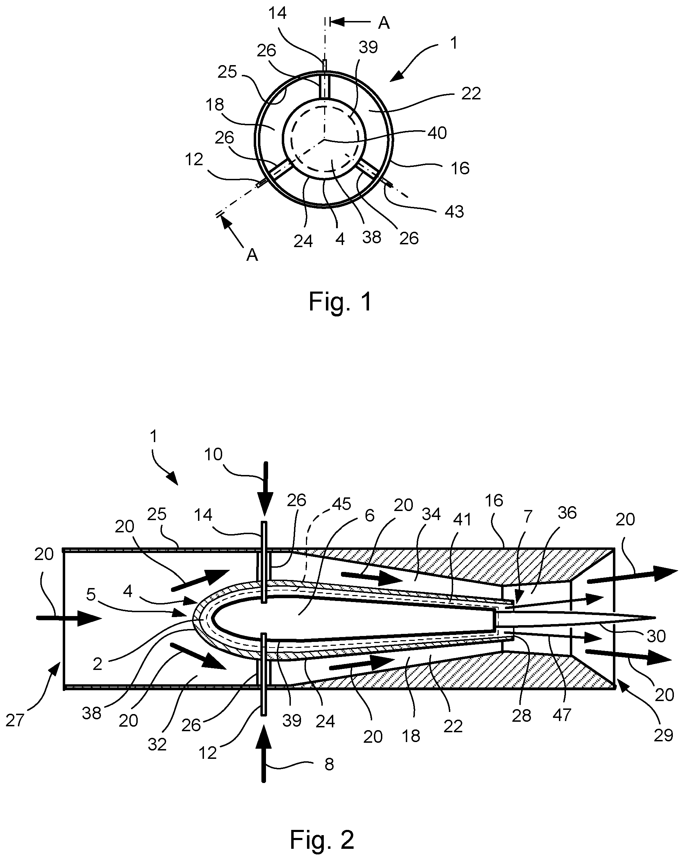

Figure 1 schematically illustrates in a front view, a gas heater assembly 1 according to an example. Figure 2 schematically illustrates the gas heater assembly in a section view along line A-A in Figure 1. The gas heater assembly 1 comprising a burner body 4 comprising a burner chamber 6 for burning an injecting fuel 8 and an oxidizing gas 10, which burner chamber 6 is arranged in a cavity 2 of the burning body 4. The burner body 4 comprises a front end 5 and a rear end 7. A first conveying pipe 12 is configured to supply the injecting fuel 8 to the burner chamber 6. A second conveying pipe 14 is configured to supply the oxidizing gas 10 to the burner chamber 6. A burner housing 16 comprising a housing wall 25 is configured to encircle the burner body 4 and to create a first annular channel 18 for a gas 20 in a space 22 between the outside of the burner body 4 and the inside of the housing wall 25 of the burner housing 16. The burner housing 16 comprising a first open end 27 and a second open end 29. Burner body supports 26 are configured to support and centre the burner body 4 in the burner housing 16. The rear end 7 of the burner body 4 comprises a flame opening 28 for a burning flame 30, which is configured to heat the gas 20 which passing the first annular channel 18.

The first annular channel 18 for the gas 20 comprises a first diverging section 32 in which the gas 20 of reduced temperature is guided into a second converging section 34, in which the velocity of the gas 20 of reduced temperature increases. The second converging section 34 discharges in a third high velocity section 36, in which the burning flame 30 increases the temperature and the velocity of the gas 20.

The front end 5 of the burner body 4 comprises a dome shaped nose cone 38 arranged in the first diverging section 32, which dome shaped nose cone 38 is configured to split, diverge and guide the gas 20 of reduced temperature into the second converging section 34. The part of the burner body 4, which is arranged in the second converging section 34 has a conical frustum shape, which converges in the direction towards the flame opening 28 of the burner body 4. The velocity of the gas 20, which is increased in the third high velocity section 36 is configured to create a vacuum or a negative draught in the first diverging section 32.

The first conveying pipe 12 for supplying the injecting fuel 8 to the burner chamber 6 is configured to supply hydrogen as injecting fuel 8, and the second conveying pipe 14 for supplying the oxidizing gas 10 to the burner chamber 6 is configured to inject oxygen or air as an oxidizing gas 10 to burn together with the hydrogen.

The at least one burner body support 26 is configured to housing and guide the first and second conveying pipes 12, 14 into the burner chamber 6 of the burner body 4. The burner body 4 has a circular cross section. The first annular channel 18 for the gas 20 and the circular burner body 4 has a common center line 40.

The burner body 4 comprises a central burner element 39 arranged in the cavity 2. In figure 1, the central burner element is shown with a dashed line. The central burner element 39 comprises the burner chamber 6. An outer wall 24 of the burner body 4 is configured to encircle the central burner element 39 and to create a second annular channel 41 between the outside of the central burner element 39 and the inside of the outer wall 24 of the burner body 4.

A third conveying pipe 43 is arranged for supplying a second makeup gas 47 to the second annular channel 41, which second makeup gas 47 is configured to flow out through the flame opening 28 of the burner body 4. The burner body 4 comprises at least one intermediate burner element 45, which is arranged in the second annular channel 41. The intermediate burner element 45 is shown with a dashed line in figure 2.

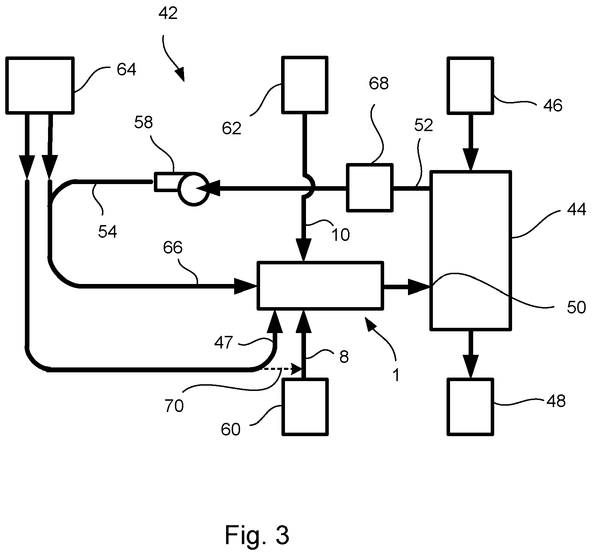

Figure 3 schematically illustrates a system for a gas heating process according to an example. The second aspect of this disclosure shows a system 42 for a gas heating process. The system 1 comprising a furnace 44 configured for receiving heated gases 20. An inlet opening 50 is arranged in the furnace 44, which is configured for supplying the heated gases 20 to the furnace 44. An outlet channel 52 is connected to the furnace 44, which is configured for remove the gases 20 as spent gases or utilized gases from the furnace 44 and for supply the gases 20 to the inlet opening 50 of the furnace 44 via a recirculation circuit 54. The gas heater assembly 1 is arranged in the recirculation circuit 54.

A process gas recirculation compressor 58 is connected to the recirculation circuit 54 and upstream of the gas heater assembly 1. An injecting fuel source 60 is connected to the gas heater assembly 1. An oxidizing gas source 62 is connected to the gas heater assembly 1.

Hydrogen from a makeup fuel source 64 is supplied as a second makeup gas 47 to the gas heater assembly 1 and/or as a first makeup gas 66 to the recirculation circuit 54. Hydrogen from the makeup fuel source 64 may also be supplied as injecting fuel 8 to the burner chamber 6, which is indicated by the dashed line and arrow 70. The furnace may be a direct reduction reactor 44 for reduction of iron ore 46 into iron 48. A gas cooling and cleaning device 68 is arranged in the recirculation circuit 54 at the outlet channel 52.

The foregoing description of the examples has been furnished for illustrative and descriptive purposes. It is not intended to be exhaustive, or to limit the examples to the variants described. Many modifications and variations will obviously be apparent to one skilled in the art. The examples have been chosen and described in order to best explicate principles and practical applications, and to thereby enable one skilled in the art to understand the examples in terms of its various examples and with the various modifications that are applicable to its intended use. The components and features specified above may, within the framework of the examples, be combined between different examples specified.

## Claims

1. A gas heater assembly (1) for a gas heating process, the assembly (1) comprising:
a burner body (4) comprising a burner chamber (6) for burning an injecting fuel (8) and an oxidizing gas (10), which burner chamber (6) is arranged in a cavity (2) of the burning body (4);
a first conveying pipe (12) for supplying the injecting fuel (8) to the burner chamber (6);
a second conveying pipe (14) for supplying the oxidizing gas (10) to the burner chamber (6);
a burner housing (16), comprising a housing wall (25), which is configured to encircle the burner body (4) and to create a first annular channel (18) for a gas (20) in a space (22) between the outside of the burner body (4) and the inside of the housing wall (25) of the burner housing (16), wherein the first annular channel (18) for the gas (20) comprises a first diverging section (32) in which the gas (20) to be heated is guided into a second converging section (34), in which the velocity of the gas (20) to be heated increases, and wherein the second converging section (34) discharges in a third high velocity section (36), in which the burning flame (30) increases the temperature and the velocity of the gas (20) to be heated;
at least one burner body support (26), which is configured to support and centre the burner body (4) in the burner housing (16), wherein
the burner body (4) comprises a flame opening (28) for a burning flame (30), which is configured to heat the gas (20) which passing the first annular channel (18), and
wherein the burner body (4) comprises a dome shaped nose cone (38) arranged in the first diverging section (32), which dome shaped nose cone (38) is configured to split, diverge and guide the gas (20) to be heated into the second converging section (34).

2. The assembly (1) according to claim 1, wherein a front end (5) of the burner body (4) comprises the dome shaped nose cone (38).

3. The assembly (1) according to any one of claims 1 and 2, wherein the burner body (4) arranged in the second converging section (34) has a conical frustum shape, which converges in the direction towards the flame opening (28) of the burner body (4).

4. The assembly (1) according to any one of the preceding claims, wherein the velocity of the gas (20) to be heated, which is increased in the third high velocity section (36) is configured to create a vacuum in the first diverging section (32).

5. The assembly (1) according any one of the preceding claims, wherein the first conveying pipe (12) for supplying the injecting fuel (8) to the burner chamber (6) is configured for supplying hydrogen as injecting fuel (8), and the second conveying pipe (14) for supplying the oxidizing gas (10) to the burner chamber (6) is configured to inject oxygen or air as an oxidizing gas (10) to burn together with the hydrogen.

6. The assembly (1) according to any one of the preceding claims, wherein the at least one burner body support (26) is configured to housing and guide the first and second conveying pipes (12;14) into the burner chamber (6) of the burner body (4).

7. The assembly (1) according to any one of the preceding claims, wherein the burner body (4) has a circular cross section.

8. The assembly (1) according to claim 7 wherein the first annular channel (18) for the gas (20) to be heated and the circular burner body (4) has a common center line (40).

9. The assembly (1) according to any one of the preceding claims, wherein the burner body (4) comprises a central burner element (39) arranged in the cavity (2), and which central burner element (39) comprising the burner chamber (6), and wherein an outer wall (24) of the burner body (4) is configured to encircle the central burner element (39) and to create a second annular channel (41) between the outside of the central burner element (39) and the inside of the outer wall (24) of the burner body (4).

10. The assembly (1) according to claim 9, wherein a third conveying pipe (43) is arranged for supplying a second makeup gas (47) to the second annular channel (41), which second makeup gas (47) is configured to flow out through the flame opening (28) of the burner body (4).

11. The assembly (1) according to any one of the claims 9 and 10, wherein the burner body (4) comprises at least one intermediate burner element (45), which is arranged in the second annular channel (41).

12. A system (42) for a gas heating process, the system (1) comprising:
a furnace (44) configured for receiving heated gases (20);
an inlet opening (50) of the furnace (44), configured for supplying the heated gases (20) to the furnace (44);
an outlet channel (52) connected to the furnace (44), configured for remove the gases (20) as spent gases or utilized gases from the furnace (44) and for supply the gases (20) to the inlet opening (50) of the furnace (44) via a recirculation circuit (54), wherein the system comprises:
a gas heater assembly (1) according to any one of the preceding claims.

13. The system (42) according to claim 12, wherein a process gas recirculation compressor (58) is connected to the recirculation circuit (54) and upstream of the gas heater assembly (1).

14. The system (42) according to any one of the claims 12 and 13, wherein an injecting fuel source (60) is connected to the gas heater assembly (1).

15. The system (42) according to any one of the claims 12 - 14, wherein an oxidizing gas source (62) is connected to the gas heater assembly (1).

16. The system (42) according to any one of the claims 12 - 15, wherein hydrogen from a makeup fuel source (64) is supplied as a second makeup gas (47) to the gas heater assembly (1) and/or as a first makeup gas (66) to the recirculation circuit (54).

17. The system (42) according to any one of the claims 12 - 16, wherein the furnace is a direct reduction reactor (44) for reduction of iron ore (46) into iron (48).

## Patentansprüche

1. Gasheizbaugruppe (1) für einen Gasheizprozess, wobei die Baugruppe (1) Folgendes umfasst:
einen Brennerkörper (4), der eine Brennerkammer (6) zum Brennen eines Einspritzkraftstoffs (8) und eines oxidierenden Gases (10) umfasst, wobei die Brennerkammer (6) in einem Hohlraum (2) des Brennkörpers (4) angeordnet ist;
ein erstes Förderrohr (12) zum Zuführen des Einspritzkraftstoffs (8) in die Brennerkammer (6);
ein zweites Förderrohr (14) zum Zuführen des oxidierenden Gases (10) in die Brennerkammer (6);
ein Brennergehäuse (16), das eine Gehäusewand (25) umfasst, welche dazu konfiguriert ist, den Brennerkörper (4) zu umschließen und einen ersten ringförmigen Kanal (18) für ein Gas (20) in einem Raum (22) zwischen der Außenseite des Brennerkörpers (4) und der Innenseite der Gehäusewand (25) des Brennergehäuses (16) zu erzeugen, wobei der erste ringförmige Kanal (18) für das Gas (20) einen ersten divergierenden Abschnitt (32) umfasst, in welchem das zu erhitzende Gas (20) in einen zweiten konvergierenden Abschnitt (34) geleitet wird, in welchem die Geschwindigkeit des zu erhitzenden Gases (20) ansteigt, und wobei der zweite konvergierende Abschnitt (34) in einem dritten Hochgeschwindigkeitsabschnitt (36) entlädt, in welchem die brennende Flamme (30) die Temperatur und die Geschwindigkeit des zu erhitzenden Gases (20) erhöht;
mindestens einen Brennerkörperträger (26), welcher dazu konfiguriert ist, den Brennerkörper (4) in dem Brennergehäuse (16) zu tragen und in diesem zu zentrieren, wobei
der Brennerkörper (4) eine Flammenöffnung (28) für eine brennende Flamme (30) umfasst, welche dazu konfiguriert ist, das Gas (20) zu erhitzen, welches den ersten ringförmigen Kanal (18) passiert, und
wobei der Brennerkörper (4) einen kuppelförmigen Nasenkegel (38) umfasst, der in dem ersten divergierenden Abschnitt (32) angeordnet ist, wobei der kuppelförmige Nasenkegel (38) dazu konfiguriert ist, das zu erhitzende Gase (20) aufzuteilen, zu divergieren und in den zweiten konvergierenden Abschnitt (34) zu leiten.

2. Baugruppe (1) nach Anspruch 1, wobei ein vorderes Ende (5) des Brennerkörpers (4) den kuppelförmigen Nasenkegel (38) umfasst.

3. Baugruppe (1) nach einem der Ansprüche 1 und 2, wobei der Brennerkörper (4), der in dem zweiten konvergierenden Abschnitt (34) angeordnet ist, eine Kegelstumpfform aufweist, welche in der Richtung zu der Flammenöffnung (28) des Brennerkörpers (4) hin konvergiert.

4. Baugruppe (1) nach einem der vorhergehenden Ansprüche, wobei die Geschwindigkeit des zu erhitzenden Gases (20), welche in dem dritten Hochgeschwindigkeitsabschnitt (36) erhöht wird, dazu konfiguriert ist, ein Vakuum in dem ersten divergierenden Abschnitt (32) herzustellen.

5. Baugruppe (1) nach einem der vorhergehenden Ansprüche, wobei das erste Förderrohr (12) zum Zuführen des Einspritzkraftstoffs (8) in die Brennerkammer (6) dazu konfiguriert ist, Wasserstoff als Einspritzkraftstoff (8) zuzuführen, und das zweite Förderrohr (14) zum Zuführen des oxidierenden Gases (10) in die Brennerkammer (6) dazu konfiguriert ist, Sauerstoff oder Luft als oxidierendes Gas (10) einzuspritzen, um zusammen mit dem Wasserstoff zu verbrennen.

6. Baugruppe (1) nach einem der vorhergehenden Ansprüche, wobei der mindestens eine Brennerkörperträger (26) dazu konfiguriert ist, das erste und das zweite Förderrohr (12;14) einzuhausen und in die Brennerkammer (6) des Brennerkörpers (4) zu leiten.

7. Baugruppe (1) nach einem der vorhergehenden Ansprüche, wobei der Brennerkörper (4) einen kreisförmigen Querschnitt aufweist.

8. Baugruppe (1) nach Anspruch 7, wobei der erste ringförmige Kanal (18) für das zu erhitzende Gas (20) und der kreisförmige Brennerkörper (4) eine gemeinsame Mittellinie (40) aufweist.

9. Baugruppe (1) nach einem der vorhergehenden Ansprüche, wobei der Brennerkörper (4) ein mittiges Brennerelement (39) umfasst, das in dem Hohlraum (2) angeordnet ist, und wobei das mittige Brennerelement (39) die Brennerkammer (6) umfasst, und wobei eine Außenwand (24) des Brennerkörpers (4) dazu konfiguriert ist, das mittige Brennerelement (39) zu umschließen und einen zweiten ringförmigen Kanal (41) zwischen der Außenseite des mittigen Brennerelements (39) und der Innenseite der Außenwand (24) des Brennerkörpers (4) herzustellen.

10. Baugruppe (1) nach Anspruch 9, wobei ein drittes Förderrohr (43) zum Zuführen eines zweiten Zusatzgases (47) in den zweiten ringförmigen Kanal (41) angeordnet ist, wobei das zweite Zusatzgas (47) dazu konfiguriert ist, über die Flammenöffnung (28) des Brennerkörpers (4) herauszuströmen.

11. Baugruppe (1) nach einem der Ansprüche 9 und 10, wobei der Brennerkörper (4) mindestens ein Zwischenbrennerelement (45) umfasst, welches in dem zweiten ringförmigen Kanal (41) angeordnet ist.

12. System (42) für einen Gasheizprozess, wobei das System (1) Folgendes umfasst:
einen Ofen (44), der zum Aufnehmen von erhitzten Gasen (20) konfiguriert ist;
eine Einlassöffnung (50) des Ofens (44), die zum Zuführen der erhitzten Gase (20) in den Ofen (44) konfiguriert ist;
einen Auslasskanal (52), der mit dem Ofen (44) verbunden ist, der zum Entfernen der Gase (20) als verbrauchte Gase oder verwendete Gase aus dem Ofen (44) und zur Zuführung der Gase (20) über einen Umwälzkreis (54) in die Einlassöffnung (50) des Ofens (44) konfiguriert ist, wobei das System Folgendes umfasst:
eine Gasheizbaugruppe (1) nach einem der vorhergehenden Ansprüche.

13. System (42) nach Anspruch 12, wobei ein Prozessgasumwälzverdichter (58) mit dem Umwälzkreis (54) verbunden ist und stromaufwärts von der Gasheizbaugruppe (1) liegt.

14. System (42) nach einem der Ansprüche 12 und 13, wobei eine Einspritzkraftstoffquelle (60) mit der Gasheizbaugruppe (1) verbunden ist.

15. System (42) nach einem der Ansprüche 12-14, wobei eine Quelle (62) oxidierenden Gases mit der Gasheizbaugruppe (1) verbunden ist.

16. System (42) nach einem der Ansprüche 12-15, wobei Wasserstoff aus einer Zusatzkraftstoffquelle (64) der Gasheizbaugruppe (1) als zweites Zusatzgas (47) und/oder dem Umwälzkreis (54) als erstes Zusatzgas (66) zugeführt wird.

17. System (42) nach einem der Ansprüche 12-16, wobei der Ofen ein Direktreduktionsreaktor (44) zur Reduktion von Eisenerz (46) in Eisen (48) ist.

## Revendications

1. Ensemble réchauffeur de gaz (1) pour un processus de chauffage de gaz, l'ensemble (1) comprenant :
un corps de brûleur (4) comprenant une chambre de brûleur (6) pour brûler un combustible d'injection (8) et un gaz oxydant (10), laquelle chambre de brûleur (6) est agencée dans une cavité (2) du corps de brûleur (4) ;
une première conduite d'acheminement (12) pour fournir le combustible d'injection (8) à la chambre de brûleur (6) ;
une deuxième conduite d'acheminement (14) pour fournir le gaz oxydant (10) à la chambre de brûleur (6) ;
un boîtier de brûleur (16), comprenant une paroi de boîtier (25), qui est configurée pour encercler le corps de brûleur (4) et créer un premier canal annulaire (18) pour un gaz (20) dans un espace (22) entre l'extérieur du corps de brûleur (4) et l'intérieur de la paroi de boîtier (25) du boîtier de brûleur (16), dans lequel le premier canal annulaire (18) pour le gaz (20) comprend une première section divergente (32) dans lequel le gaz (20) à chauffer est guidé jusque dans une deuxième section convergente (34), dans lequel la vitesse du gaz (20) à chauffer augmente, et dans lequel la deuxième section convergente (34) débouche dans une troisième section à grande vitesse (36), dans lequel la flamme de combustion (30) augmente la température et la vitesse du gaz (20) à chauffer ;
au moins un support de corps de brûleur (26), qui est configuré pour supporter et centrer le corps de brûleur (4) dans le boîtier de brûleur (16), dans lequel
le corps de brûleur (4) comprend une ouverture de flamme (28) pour une flamme de combustion (30), qui est configurée pour chauffer le gaz (20) traversant le premier canal annulaire (18), et
dans lequel le corps de brûleur (4) comprend un cône de nez en forme de dôme (38) agencé dans la première section divergente (32), lequel cône de nez en forme de dôme (38) est configuré pour séparer, faire diverger et guider le gaz (20) à chauffer jusque dans la deuxième section convergente (34).

2. Ensemble (1) selon la revendication 1, dans lequel une extrémité avant (5) du corps de brûleur (4) comprend le cône de nez en forme de dôme (38).

3. Ensemble (1) selon l'une quelconque des revendications 1 et 2, dans lequel le corps de brûleur (4) agencé dans la deuxième section convergente (34) présente une forme tronconique, qui converge en direction de l'ouverture de flamme (28) du corps de brûleur (4).

4. Ensemble (1) selon l'une quelconque des revendications précédentes, dans lequel la vitesse du gaz (20) à chauffer, qui est augmentée dans la troisième section à grande vitesse (36), est configurée pour créer une dépression dans la première section divergente (32).

5. Ensemble (1) selon l'une quelconque des revendications précédentes, dans lequel la première conduite d'acheminement (12) pour fournir le combustible d'injection (8) à la chambre de brûleur (6) est configurée pour fournir de l'hydrogène en tant que combustible d'injection (8), et la deuxième conduite d'acheminement (14) pour fournir le gaz oxydant (10) à la chambre de brûleur (6) est configurée pour injecter de l'oxygène ou de l'air en tant que gaz oxydant (10) afin qu'il brûle conjointement avec l'hydrogène.

6. Ensemble (1) selon l'une quelconque des revendications précédentes, dans lequel ledit au moins un support de corps de brûleur (26) est configuré pour loger et guider les première et deuxième conduites d'acheminement (12;14) jusque dans la chambre de brûleur (6) du corps de brûleur (4).

7. Ensemble (1) selon l'une quelconque des revendications précédentes, dans lequel le corps de brûleur (4) présente une section transversale circulaire.

8. Ensemble (1) selon la revendication 7, dans lequel le premier canal annulaire (18) pour le gaz (20) à chauffer et le corps de brûleur circulaire (4) ont un axe central commun (40).

9. Ensemble (1) selon l'une quelconque des revendications précédentes, dans lequel le corps de brûleur (4) comprend un élément de brûleur central (39) agencé dans la cavité (2), ledit élément de brûleur central (39) comprenant la chambre de brûleur (6), et dans lequel une paroi externe (24) du corps de brûleur (4) est configurée pour encercler l'élément de brûleur central (39) et pour créer un second canal annulaire (41) entre l'extérieur de l'élément de brûleur central (39) et l'intérieur de la paroi externe (24) du corps de brûleur (4).

10. Ensemble (1) selon la revendication 9, dans lequel une troisième conduite d'acheminement (43) est agencée pour fournir un second gaz d'appoint (47) au second canal annulaire (41), ledit second gaz d'appoint (47) étant configuré pour s'écouler à travers l'ouverture de flamme (28) du corps de brûleur (4).

11. Ensemble (1) selon l'une quelconque des revendications 9 et 10, dans lequel le corps de brûleur (4) comprend au moins un élément de brûleur intermédiaire (45), qui est agencé dans le second canal annulaire (41).

12. Système (42) pour un processus de chauffage de gaz, le système (1) comprenant :
un four (44) configuré pour recevoir des gaz chauffés (20) ;
une ouverture d'entrée (50) du four (44), configurée pour fournir les gaz chauffés (20) au four (44) ;
un canal de sortie (52) relié au four (44), configuré pour évacuer les gaz (20) sous forme de gaz usés ou de gaz utilisés hors du four (44) et pour fournir les gaz (20) à l'ouverture d'entrée (50) du four (44) par l'intermédiaire d'un circuit de recirculation (54), dans lequel le système comprend :
un ensemble réchauffeur de gaz (1) selon l'une quelconque des revendications précédentes.

13. Système (42) selon la revendication 12, dans lequel un compresseur de recirculation de gaz de processus (58) est relié au circuit de recirculation (54) en amont de l'ensemble réchauffeur de gaz (1).

14. Système (42) selon l'une quelconque des revendications 12 et 13, dans lequel une source de combustible d'injection (60) est reliée à l'ensemble réchauffeur de gaz (1).

15. Système (42) selon l'une quelconque des revendications 12 à 14, dans lequel une source de gaz oxydant (62) est reliée à l'ensemble réchauffeur de gaz (1).

16. Système (42) selon l'une quelconque des revendications 12 à 15, dans lequel de l'hydrogène provenant d'une source de combustible d'appoint (64) est fourni en tant que second gaz d'appoint (47) à l'ensemble réchauffeur de gaz (1) et/ou en tant que premier gaz d'appoint (66) au circuit de recirculation (54).

17. Système (42) selon l'une quelconque des revendications 12 à 16, dans lequel le four est un réacteur de réduction directe (44) pour la réduction de minerai de fer (46) en fer (48).
